(19) Europäisches Patentamt
European Patent Office
Office européen des brevets

(11) **EP 4 163 624 B1**

(12) **EUROPÄISCHE PATENTSCHRIFT**

(45) Veröffentlichungstag und Bekanntmachung des Hinweises auf die Patenterteilung:
**11.02.2026 Patentblatt 2026/07**

(51) Internationale Patentklassifikation (IPC):
*G01N 21/84* (2006.01)    *G01N 21/86* (2006.01)
*G01N 21/89* (2006.01)    *G01N 21/894* (2006.01)
*G01B 11/30* (2006.01)    *G01N 21/892* (2006.01)
*G01N 21/88* (2006.01)

(21) Anmeldenummer: **21201101.9**

(22) Anmeldetag: **06.10.2021**

(52) Gemeinsame Patentklassifikation (CPC):
**G01N 21/86; G01N 21/8422; G01N 21/8901; G01N 21/892; G01N 21/894;** G01N 2021/8427; G01N 2021/8883; G01N 2021/8918

(54) **VERFAHREN ZUR ERKENNUNG VON DEFEKTEN UND ZUR BESTIMMUNG DER POROSITÄT FOLIENARTIGER ELEMENTE**

METHOD FOR DETECTING DEFECTS AND DETERMINING THE POROSITY OF FILM-LIKE ELEMENTS

PROCÉDÉ DE DÉTECTION DES DÉFAUTS ET DE DÉTERMINATION DE LA POROSITÉ D'ÉLÉMENTS EN FORME DE FEUILLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.04.2023 Patentblatt 2023/15**

(73) Patentinhaber: **Fraunhofer-Gesellschaft zur Förderung der angewandten Forschung e.V. 80686 München (DE)**

(72) Erfinder:
• **Bendjus, Beatrice**
  **01277 Dresden (DE)**
• **Cikalova, Ulana**
  **01277 Dresden (DE)**
• **Chen, Lili**
  **01277 Dresden (DE)**

(74) Vertreter: **Pfenning, Meinig & Partner mbB Patent- und Rechtsanwälte An der Frauenkirche 20 01067 Dresden (DE)**

(56) Entgegenhaltungen:
EP-A1- 2 580 570    EP-A2- 0 919 802
DE-A1- 102014 224 852    DE-B3- 102015 221 697
JP-A- 2014 126 479    JP-A- 2020 094 976

• CHEN L ET AL: "Laser speckle photometry: an advanced method for defect detection in ceramics", PROCEEDINGS OF SPIE; [PROCEEDINGS OF SPIE; ISSN 0277-786X; VOL. 8615], SPIE, 1000 20TH ST. BELLINGHAM WA 98225-6705 USA, vol. 10834, 7 September 2018 (2018-09-07), pages 1083415 - 1083415, XP060113627, ISBN: 978-1-5106-2099-5, DOI: 10.1117/12.2318537
• TOWSYFYAN HOSSEIN ET AL: "Successes and challenges in non-destructive testing of aircraft composite structures", CHINESE JOURNAL OF AERONAUTICS, ELSEVIER, AMSTERDAM, NL, vol. 33, no. 3, 9 October 2019 (2019-10-09), pages 771 - 791, XP086137993, ISSN: 1000-9361, [retrieved on 20191009], DOI: 10.1016/ J.CJA.2019.09.017

**Beschreibung**

Die Erfindung betrifft ein Verfahren zur Erkennung von Defekten und zur Bestimmung der Porosität folienartiger Elemente.

Sie kann für ein Monitoring der Elektrodenfertigung, schneller Fertigungsprozesse (Beschichtungen, additive Prozesse u.a.), der Herstellung von Folienmaterial bzw. in Bahnen gefertigter Produkte, der Plattenmaterialherstellung oder von Rolle-zu-Rolle-Prozessen eingesetzt werden.

Leistungsfähige und kostengünstige Energiespeicher sind eine Schlüsselkomponente für die Energiewende. Für den breiten Massenmarkt und die zukünftige Verbreitung von Lithium-Ionen-Batterien zur mobilen oder stationären Energiespeicherung müssen die Fertigungskosten für Batteriezellen weiter reduziert werden. Einen wichtigen Beitrag zur Reduzierung der Herstellkosten stellt die Senkung von Produktionsfehlern und daraus resultierenden hohen Ausschussraten dar. Um eine größtmögliche Qualität in der Batterieproduktion bei minimalem Ausschuss sicherzustellen, müssen Mängel bereits früh im Fertigungsprozess und noch vor der Weiterverarbeitung detektiert werden. Auch im Hinblick auf die ökologische Nachhaltigkeit ist eine ressourcenschonende Batteriefertigung elementar.

In der Batteriezellproduktion führen nicht oder zu spät erkannte Produktionsfehler zu hohen Ausschussraten und Folgekosten durch etwaige Zelldefekte im Betrieb. Dabei wirken Schwankungen der Elektrodenqualität in Form von Defekten wie Agglomerate, Trocknungsrisse, Unregelmäßigkeiten der Beladung und Querkontaminationen als zentrale Fehlerquellen. Trotz optimierter Fertigungstechnologien treten bei der Herstellung von Batteriekomponenten aufgrund der Komplexität der Prozesse noch viele Fehler auf, deren Beseitigung sehr zeit- und kostenintensiv ist. Eine übliche Qualitätsprüfung zur Identifizierung dieser Fehler am Bauteil ist beispielsweise die Sichtkontrolle. Die Erkennbarkeit der Fehler ist dabei subjektiv und größenabhängig. Darüber hinaus gibt es eine ganze Reihe von zerstörungsfreien Prüfmethoden auf der Basis von Röntgen-Transmissions- und -Rückstreuungstechniken sowie Ultraschall-Remission mit der Zielsetzung, Fehler in der oberflächennahen Zone und in der Tiefe dieser Produkte zu erkennen. Diese Verfahren sind in der Regel allerdings aufwendig, da die Proben durch Laborgeräte einzeln gescannt werden und die Geräte können nur schlecht oder gar nicht in den Produktionsprozess eingebunden werden. Daher besteht ein hoher wirtschaftlicher Bedarf an Prüfverfahren, die schnell arbeiten und in Abhängigkeit von Dickengradienten konnte Dickenunterschiede von 4 $\mu$m erkennen. Die Ermittlung der Porosität anhand der thermischen Eigenschaften der Beschichtungen erfolgte ebenfalls mittels IR. Es wurde deutlich, dass die thermische Reaktion einer Elektrode mit der Porosität und Dicke der Beschichtung zusammenhängt. Die Unterschiede der thermischen Ausdehnung der Beschichtung können mittels Speckle-Interferenzmuster verstärkt und demzufolge genauer als bei der IR-Methode detektiert werden. Die nicht-optischen Methoden wie z.B. röntgentomographische Untersuchungen werden hauptsächlich im Zellenaufbau angewendet, während elektromagnetische Methoden (basierend auf dem Wirbelstromeffekt) zur Charakterisierung der flüssigen Beschichtungen vor dem Trocknungsvorgang zum Einsatz kommen.

Aktuell gibt es auf dem Markt ein sehr breites Angebot zur optischen Inline-Inspektion von Folienware unter Anwendung von Zeilenkameras (Typ CCD-Kameras) und LED-Beleuchtung, welche auch zur Detektion von Kratzern, Pinholes, Blasen und anderen Inhomogenitäten der Elektrodenbeschichtungen angewendet werden können. Die Auflösung der Systeme hängt hauptsächlich von der Chipgröße der Kamera und der verwendeten Optik ab und liegt bei maximal 10 $\mu$m. Die Auswertung mittels Bildverarbeitung wird dazu häufig nicht angeboten. Durch die einseitige Einstellung der Belichtungseinheit bleiben aufgrund der reflektierenden Probenoberflächen viele Fehler unentdeckt. So bestehen verschiedene Anforderungen, wie z.B. eine 100% Inline-Überwachung auf Defekte der laufenden Elektrodenfolie, eine Fehlererkennung und Porositätscharakterisierung mit einem einzigen kompakten Messsystem, die Möglichkeit einer Anzeige der Echtzeitergebnisse → Wählbare Ergebnisausgabe: als Bild/ Parameterliste/ Ampel, die Einsetzbarkeit in harschen Umgebungen, ein einfaches und kostengünstiges Setup, ein modularer Aufbau und ein möglicher Einsatz in allen technologischen Schritten der Elektrodenfertigung von Li-Ionen-Batterien sowie artverwandten Prozessen.

Die Patentschrift DE 10 2015 221697 B3 ist auf eine Anordnung zur Bestimmung der Oberflächenbeschaffenheit von Bauteiloberflächen gerichtet und offenbart auch eine Untersuchung von bewegten Metallfolien.

Es ist daher insbesondere Aufgabe der Erfindung Defekte und Porositäten unmittelbar bei bzw. nach der Durchführung eines Herstellungsverfahrens bzw. einem Herstellungsverfahrensschritts zerstörungsfrei bestimmen zu können, wobei dies innerhalb kleiner Zeitintervalle, mit ausreichender Genauigkeit und relativ geringem Aufwand erreicht werden soll.

Erfindungsgemäß wird diese Aufgabe mit einem Verfahren, das die Merkmale des Anspruchs 1 aufweist, gelöst. Vorteilhafte Ausgestaltungen und Weiterbildungen können mit in abhängigen Ansprüche bezeichneten Merkmalen realisiert werden.

Bei dem Verfahren wird von einer ersten Strahlungsquelle elektromagnetische Strahlung mit den Wellenlängen des sichtbaren Lichts strichförmig und mit einer zweiten Strahlungsquelle kohärente monochromatische elektromagnetische Strahlung auf die Oberfläche eines folienartigen Elements ebenfalls strichförmig auf gleiche Positionen alternierend gerichtet. Es erfolgt also eine Bestrahlung in einem Oberflächenbereich, der einer bevorzugt geraden Linie folgt. Erste und zweite Strahlungsquelle werden immer nacheinander aktiviert, so dass zu gleichen Zeiten immer nur elektromagnetische Strahlung, die entweder von der ersten oder der zweiten Strahlungsquelle emittiert wird, auf die jeweilige Oberfläche auftrifft.

Die mit einer Zeilenkamera oder Flächenkamera zeitlich nacheinander erfassten Abbildungen werden gemeinsam mit vorab an gleichen folienartigen Elementen in gleicher Form erfassten Abbildungen, die bestimmte Defekte repräsentieren, einem Lernprozess auf Basis eines konvolutionalen neuronalen Netzwerks (CNN) unterzogen und durch Vergleich von bekannten Defekten, die vorab an gleichen folienartigen Elementen erkannt worden sind, werden bestimmte Defekte erkannt und ein Defekt kann dem entsprechenden untersuchten folienartigen Element bei festgestellter Übereinstimmung zugeordnet werden.

Parallel werden mit einer elektronischen Flächenkamera Abbildungen (frames) des beleuchteten Oberflächenbereichs des jeweiligen folienartigen Elements zeitaufgelöst erfasst. Die zeitaufgelöst erfassten Abbildungen werden an eine elektronische Auswerteeinheit übergeben und in einem elektronischen Speicher gespeichert.

Außerdem wird mit einer dritten Strahlungsquelle kohärente monochromatische elektromagnetische Strahlung auf einen anderen Oberflächenbereich des folienartigen Elements gerichtet und zusätzlich mit einer vierten Strahlungsquelle elektromagnetische Strahlung in gepulster Form auf den anderen Oberflächenbereich oder in dessen Nähe gerichtet, so dass ein Energieeintrag erfolgt, der dynamische Speckle-Muster generiert. Unter Nähe kann man einen Abstand von maximal 15 mm verstehen.

Die dynamischen Speckle-Muster werden mit einer Digitalkamera orts- und zeitaufgelöst mit mehreren Abbildungen (frames) nacheinander ab einem erfolgten Energieeintrag, der durch einen Puls elektromagnetsicher Strahlung, die von der vierten Strahlungsquelle emittiert worden ist, erfasst und einer Auswertung in der elektronischen Auswerteeinheit unterzogen, um damit die Porosität zu bestimmen. Dabei werden Grauwertintensitäten $I(i,j,\tau)$ von bekannten Positionen (Pixeln) der zweidimensional zu jeweiligen Zeiten $\tau$ erfassten Abbildungen bestimmt und daraus der jeweilige Differenzkorrelationsfunktionsverlauf bestimmt und dann mit dem Maximum eines so bestimmten Differenzkorrelationsfunktionsverlaufs die Porosität des folienartigen Elements bestimmt wird.

Bevorzugt werden die Differenzkorrelationsfunktionsverläufe mit der Gleichung

$$DKF(\tau) = \left\langle \frac{\sum_{i,j}\left|I_{ij}(\tau) - I_{ij}(1)\right|}{\langle I(1) \rangle} \right\rangle$$

bestimmt.

Vor der Porositätsmessungen wird ein Kalibrierprozess durchgeführt. Die Messungen werden dabei an verschiedenen Proben mit unterschiedlichen Porositäten durchgeführt. Die nach DKF-Gleichung berechneten Ergebnisse werden zunächst mit der Porosität von Referenzproben korreliert (die Amplitude der DKF-Kurve korreliert mit der Porosität der entsprechenden Probe), so dass eine ΔDKF-Porositätskurve erstellt werden kann. Diese Kalibrierungskurve wird in der weiteren Anwendung verwendet, um die Porosität zu charakterisieren, indem die dynamischen Speckle-Muster unter Verwendung der DKF-Gleichung ausgewertet werden.

Dabei sind $I(i,j,\tau)$ die jeweiligen erfassten Grauwertintensitäten an den Positionen i,j zur jeweiligen Zeit $\tau$ und $I(1)$ ist der räumliche mittlere Grauwert der zuerst erfassten Abbildung.

Alle vier Strahlungsquellen, die Zeilenabtastkamera, die Digitalkamera und das folienartige Element sollten relativ zueinander bewegt werden. Bevorzugt soll das folienartige Element translatorisch und besonders bevorzugt von Rolle zu Rolle bewegt werden.

Es sollten bei jeder Untersuchung eines folienartigen Elements die Messdaten von mindestens fünf nach einender erfassten Abbildungen berücksichtigt werden.

Die Abbildungen sollten in äquidistanten Zeitabständen erfasst werden, wodurch eine verbesserte Vergleichbarkeit erreicht werden kann.

Insbesondere bei der Bestimmung der Porosität sollten Abbildungen der Oberfläche des jeweiligen folienartigen Elements von einer Fläche mit einer Größe von mindestens 400 Pixel, bevorzugt in einer Matrixanordnung mit 20 Pixel * 20 Pixel innerhalb einer Fläche an der Oberfläche eines folienartigen Elements (1) in einem Bereich von 200 $\mu$m$^2$ bis 2 cm$^2$ erfasst werden.

Die vierte Strahlungsquelle sollte pulsförmig elektromagnetische Strahlung und die dritte Strahlungsquelle sollte elektromagnetische Strahlung mit einem Winkel zwischen 60° und 80° in Bezug zur Normalen der Oberfläche eines folienartigen Elements richten. Die Linienkamera oder Flächenkamera sollte oberhalb der entsprechenden bestrahlten Oberfläche angeordnet sein. Das Probenoffset kann bis zu 2 mm variieren. Die dritte Strahlungsquelle kann elektromagnetische Strahlung aus dem Wellenlängenspektrum des sichtbaren Lichts bis in den IR-Bereich hinein emittieren, wobei die Wellenlängen im Bereich von 400 nm bis 1064 nm liegen können. Unter einem Probenoffset kann man die Abweichung des jeweiligen Abstands einer Zeilen- oder Flächenkamera zur Oberfläche eines folienartigen Elements verstehen.

Die Defektdetektion kann mit einer Auflösung von 11 $\mu$m und/oder einer Messgeschwindigkeit bis zu 80 m/min für eine Bestimmung von Defekten durchgeführt werden. So können Fehler in der Elektrodenfertigung, wie z.B. Agglomerate, Blasen oder Risse erkannt werden.

Zur Detektion von Defekten können mindesten zwei Kameras eingesetzt werden, die eine höhere Ortsauflösung erreichen und/oder eine größere Breite eines folienartigen Elements abdecken.

Ergebnisse des Verfahrens können in Form von Tabellen oder bildlichen Darstellungen ausgegeben werden, wobei die Defektdichte und/oder das Ergebnis aus der Bestimmung der Differenzkorrelationsfunktion als charakteristischer Parameter ausgegeben werden kann. Dieser jeweilige charakteristische Parameter, sowie der porositätsbeschreibende Parameter, kann als Grenzwert benutzt werden, um die entsprechende Markierung von fehlerhaften Bereichen zu ermöglichen. Ein bestimmter charakteristischer Parameter kann mit entsprechenden spezifischen Grenzwerten, die vorab an bekannten vergleichbaren Proben durch Kalibrierung erhalten worden sind, verglichen werden und in einem Oberflächenbereich des jeweiligen folienartigen Elements in dem eine Über- oder Unterschreitung eines spezifischen Grenzwertes erkannt worden ist, kann eine visuell erkennbare Markierung als bildliche Darstellung ausgebildet (z.B. aufgedruckt) oder dort projiziert werden.

Die Erfindung ist ein auf der Laser-Speckle-Photometrie basierendes Inspektionssystem insbesondere zur Inline-Überwachung von Herstellungsprozessen, z.B. von Elektrodenfolien im Trocknungs- und Kalandrierprozess. Das Inspektionssystem der Laser-Speckle-Photometrie kann einen Auswertealgorithmus zur weiteren Steuerung des jeweiligen Produktionssystems nutzen.

Mit einem Laser-Speckle-Photometrie-Verfahren (LSP) kann eine Prozessüberwachung in jeder Phase der Herstellung von insbesondere Elektrodenfolien ermöglicht werden. Dieses optische Verfahren verwendet eine kohärente Lichtquelle, beispielsweise einen Laser als dritte Strahlungsquelle, um die inspizierte Oberfläche zu beleuchten. Aufgrund der optisch rauen Oberfläche der Elektrodenfolie werden einzigartige Speckle-Muster erzeugt, die die morphologischen Informationen der jeweiligen Oberfläche enthalten. Die optischen Reflexionssignale werden von einer digitalen Zeilen- oder Flächenkamera erfasst und weiterverarbeitet. Mit Hilfe von Bildverarbeitungsverfahren und maschinellen Lernmethoden können die in der Elektrodenfolie vorhandenen Defekte durch Analyse der aufgezeichneten Speckle-Muster in den erfassten Abbildungen automatisch erkannt und klassifiziert werden. Bei dieser Erfindung wird eine Speckle-Muster-Datenbank erstellt und in einem elektronischen Speicher gespeichert. Ein Deep-Learning-Modell kann basierend auf dem Convolutional Neural Network (CNN) trainiert werden, indem die Speckle-Bilder verschiedener Defekte verwendet werden. Dabei kann eine Software eingesetzt werden, die unter der Bezeichnung Yolo v4 frei zugänglich verfügbar ist und mit der große Datenmengen in relativ kurzer Zeit und ausreichender Genauigkeit verarbeitet werden können.

Ein Datensatz sollte mit mindestens 6000 Ereignissen von Proben folienartiger Elemente mittels Laser-Speckle-Photometrie eingesetzt werden, um ein Model mittels Algorithmen des maschinellen Lernens zu trainieren, mit dem Defekte erkannt werden können.

Zusätzlich ist eine Weißlichtquelle, zum Beispiel LED, im Aufbau des LSP-Inspektionssystems enthalten. Eine Weisslichtquelle kann als erste Strahlungsquelle eingesetzt werden. Die Weißlichtaufzeichnungen (Reflexionen) gelten als Ergänzung zu den Speckle-Inspektionsergebnissen. Bei dieser Erfindung wird die inspizierte Oberfläche eines folienartigen Elements, beispielsweise einer Elektrode alternierend von der LED als Weißlichtquelle und dem Laser als zweite Strahlungsquelle beleuchtet, die von einem elektronischen System synchronisiert angesteuert werden. Sowohl Weißlicht- als auch Speckle-Muster-Abbildungen werden an eine Auswerteoberfläche übertragen, um die Echtzeitergebnisse bei einer Defekterkennung zu erhalten. Abhängig von der Breite der inspizierten Oberfläche des jeweiligen folienartigen Elements kann durch den Einsatz eines weiteren Kamerasystems eine vordefinierte Auflösung erreicht werden, so dass 100 % des folienartigen Elements untersucht werden können. Die entsprechenden Prüfergebnisse können in einem Bildformat gespeichert werden, bei dem es sich um ein Mapping des zu prüfenden folienartigen Elements (Probe) handelt.

Aus der Auswertung der dynamischen Speckle-Muster kann die Porosität bestimmt werden. Die dynamischen Speckle-Muster werden unter Verwendung eines Anregungslasers als vierter Strahlungsquelle generiert. Wenn die Wärmewelle vom Material des jeweiligen folienartigen Elements absorbiert wird, tritt eine Wärmeausdehnung auf, die zu zeitveränderlichen Morphologieänderungen auf der erwärmten Oberfläche führt. Begleitet von diesem Phänomen werden die dynamisch generierten Speckle-Muster von einer Flächenkamera als Digitalkamera zeitaufgelöst erfasst und für die weiteren Auswertungen gespeichert.

Zur Bewertung der Porosität wird eine Differenz-Korrelationsfunktion (DKF) verwendet. Dieser dynamische Parameter basiert auf der Auswertung der Grauwertverteilung mit zeitabhängigen Grauwertänderungen eines einzelnen Pixels, also an einer Position i,j der Oberfläche.

Die zur Bestimmung der Differenz-Korrelationsfunktion genutzte Gleichung beschreibt die Intensitätsänderungen der dynamischen Speckle-Muster mit der Zeit im Vergleich zu ihrem Anfangszustand. Es konnte nachgewiesen werden, dass die nach Gleichung berechnete resultierende Kurve proportional zur lokalen Temperatur ist. Wenn ein Laserpuls, der von der vierten Strahlungsquelle emittiert worden ist, die Oberfläche bestrahlt, wird die daraus resultierende Wärmewelle absorbiert und breitet sich durch das Material aus. Poren im Volumen eines folienartigen Elements wirken als Wärmeisolatoren, die die Ausbreitung der Wärmewelle stören. Die Poren im Inneren akkumulieren die lokale Wärme um die Oberfläche und verstärken die lokale Menge der Wärme. In diesem Fall ist die Oberflächentemperatur des folienartigen Elements mit größerer Porosität höher, als die einer mit kleiner Porosität. Daher kann die Porosität von Material durch die Amplitude der Korrelationsfunktion charakterisiert werden.

Die mit Gleichung berechnete DKF ist ein zeitabhängiges Ergebnis. Ein DKF-Kurvenverlauf entspricht einer einzelnen Messung. Zur Charakterisierung der Porosität wird die Amplitude des DKF-Kurvenverlaufs (max-min) verwendet.

Vor der Anwendung des Messsystems sollte ein Kalibrierprozess durchgeführt werden. Die nach Gleichung (DKF) berechneten Ergebnisse können zunächst mit der Porosität von Referenzproben korreliert werden, so dass eine DKF(Amplitude)-Porositätskurve (oder ΔDKF - Porositätskurve) erstellt werden kann. In der endgültigen Anwendung können die Ergebnisse der DKF aus den von der Digitalkamera aufgezeichneten Daten mit der DKF-Gleichung berechnet werden. Die Porosität kann danach aus einer vordefinierten DKF(Amplitude)-Porositätskurve bestimmt werden.

Es wurde deutlich, dass die thermische Reaktion eines folienartigen Elements, wie z.B. einer Elektrode mit der Porosität und Dicke der Beschichtung zusammenhängt. Dies kann als Voraussetzung für den Einsatz der LSP zur Bestimmung der Porosität der beschichteten Elektroden oder anderer folienartiger Elementen angesehen werden. Die Unterschiede in der Wärmeausdehnung der Beschichtung können mit Speckle-Interferenzmustern verstärkt und somit genauer als mit dem IR-Verfahren erfasst werden.

Nachfolgend soll die Erfindung beispielhaft näher erläutert werden.

Dabei zeigt:

Figur 1 ein Beispiel einer Messanordnung, die bei der Durchführung des erfindungsgemäßen Verfahrens eingesetzt werden kann und

Figur 2 ein Flussdiagramm zur Verarbeitung der erfassten Daten, zu bildlichen Darstellung von Defekten und zur quantitativen Bewertung der Porosität.

Die Messanordnung besteht aus zwei Messmodulen. Das erste ist das Defektdetektionsmodul mit einer Weißlichtbeleuchtungsvorrichtung als erste Strahlungsquelle 2, einer Linienlaserbeleuchtungsvorrichtung als zweite Strahlungsquelle 3 und einer digitalen Zeilenabtastkamera 4, die mit einem Objektiv 4(a) kombiniert ist. Die Weißlichtbeleuchtungseinrichtung 2 und die Linienlaserbeleuchtungseinrichtung 3 beleuchten die Oberfläche des sich translatorisch bewegenden folienartigen Elements 1 alternierend. Die reflektierten Weißlicht- und Speckle-Signale werden vom Objektiv 4(a) abgebildet und von der Zeilenkamera 4 erfasst. Die aufgenommenen Signale werden als momentane Abbildungen zur weiteren Verarbeitung an die elektronische Auswerteeinheit 8 übergeben.

Das zweite Messmodul ist das Porositätscharakterisierungsmodul, das aus einer Anregungslasereinrichtung als vierte Strahlungsquelle 6, einer Beleuchtungslaserdiode als dritte Strahlungsquelle 7 und einer Digitalkamera 5 besteht, die mit einem Objektiv 5(a) kombiniert ist. die Beleuchtungslaserdiode 7 generiert Speckle-Muster auf der Oberfläche des jeweiligen folienartigen Elements 1. Die Anregungslasereinrichtung 6 emittiert einen thermischen Puls, der von der Probe 1 an der Auftreffposition des Brennflecks der emittierten elektromagnetischen Strahlung absorbiert wird, was zur thermischen Ausdehnung der Oberfläche führt. Die daraus resultierenden entsprechenden zeitlich variierten dynamischen Speckle-Muster werden vom Objektiv 5(a) abgebildet und von der Digitalkamera 5 erfasst. Die aufgenommenen dynamischen Speckle-Signale werden zur Weiterverarbeitung an die elektronische Auswerteeinheit 8 übergeben.

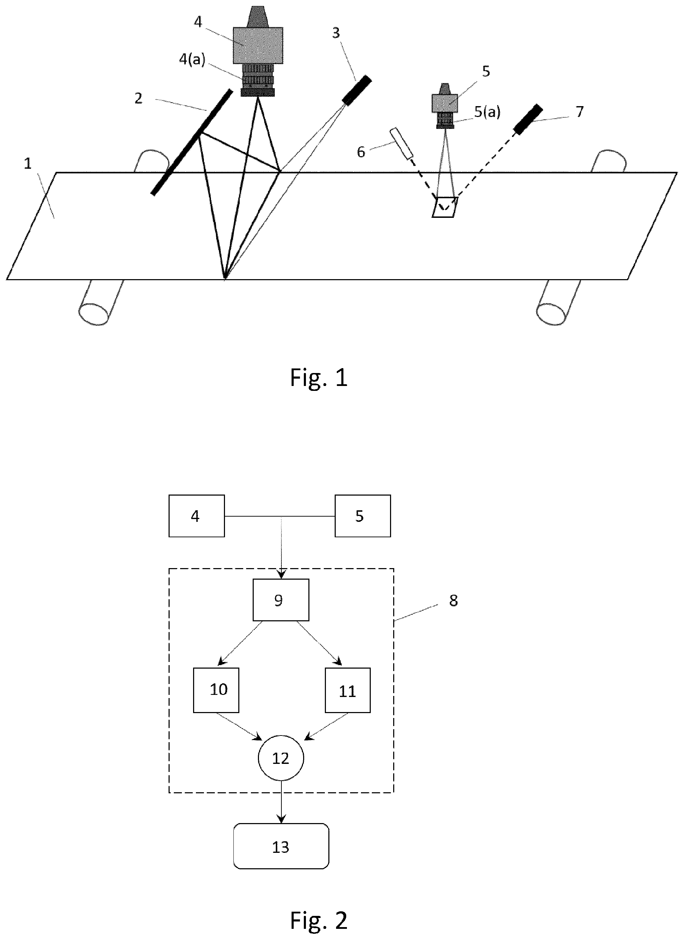

Gemäß Figur 2 werden die erfassten Messdaten der Zeilenkamera 4 und der Digitalkamera 5 in einem Datenspeicher-Server 9 gespeichert. Die Messdaten für die Fehlererkennung werden an eine LSP-Datenbank als elektronischer Speicher 10 für die automatische Fehlererkennung und -klassifizierung unter Verwendung eines vortrainierten Deep-Learning-Modells übertragen. Die Messdaten für die Porositätscharakterisierung werden an eine quantitative Analyseeinheit 11 übertragen, um die Porositätswerte basierend auf der in Gleichung (1) beschriebenen DKF zu berechnen. Die Ergebnisse der Fehlererkennung und der Porositätscharakterisierung werden an eine Synchronisationseinheit 12 gesendet, um die erwähnten Ergebnisse zusammenzuführen, die durch dieselbe Messposition bestimmt wurden. Dann werden die Endergebnisse aus der elektronischen Auswerteeinheit 8 an eine Benutzerschnittstelle 13 übertragen, um die Echtzeitergebnisse anzuzeigen.

## Patentansprüche

1. Verfahren zur Erkennung von Defekten und zur Bestimmung der Porosität folienartiger Elemente, bei dem von einer ersten Strahlungsquelle (2) elektromagnetische Strahlung mit den Wellenlängen des sichtbaren Lichts strichförmig und mit einer zweiten Strahlungsquelle (3) kohärente monochromatische elektromagnetische Strahlung auf die Oberfläche eines folienartigen Elements (1) strichförmig auf gleiche Positionen alternierend gerichtet wird und

   mit mindestens einer elektronische Zeilenabtastkamera oder Flächenkamera (4) Abbildungen des beleuchteten Oberflächenbereichs des jeweilige folienartigen Elements (1) zeitaufgelöst erfasst werden, und die zeitaufgelöst erfassten Abbildungen an eine elektronische Auswerteeinheit (8) übergeben und
   in einem elektronischen Speicher (10) gespeichert werden, wobei die erfassten Abbildungen gemeinsam mit vorab an gleichen folienartigen Elementen (1) in gleicher Form erfassten Abbildungen, die bestimmte Defekte repräsentieren, einem Lernprozess auf Basis eines konvolutionalen neuralen Netzwerks unterzogen und durch Vergleich von bekannten Defekten, die vorab an gleichen folienartigen Elementen (1) erkannt worden sind, bestimmte Defekte erkannt werden und

mit einer dritten Strahlungsquelle (7) kohärente monochromatische elektromagnetische Strahlung (7) auf eine anderen Oberflächenbereich des folienartigen Elements (1) gerichtet wird und zusätzlich mit einer vierten Strahlungsquelle (6) elektromagnetische Strahlung in gepulster Form auf den anderen Oberflächenbereich oder in dessen Nähe gerichtet wird, so dass ein Energieeintrag erfolgt, der dynamische Speckle-Muster generiert und

die dynamischen Speckle-Muster mit einer zweiten Digitalkamera (5) orts- und zeitaufgelöst mit mehreren Abbildungen, die nacheinander ab einem Energieeintrag erfasst werden, einer Auswertung in der elektronischen Auswerteeinheit (8) unterzogen werden, um damit die Porosität zu bestimmen, wobei

dazu Grauwertintensitäten I(i,j,$\tau$) von bekannten Positionen i,j der zweidimensional zu jeweiligen Zeiten $\tau$ erfassten Abbildungen bestimmt werden und daraus der jeweilige Differenzkorrelationsfunktionsverlauf bestimmt und mit dem Maximum eines so bestimmten Differenzkorrelationsfunktionsverlaufs die Porosität des folienartigen Elements (1) bestimmt wird.

2. Verfahren nach Anspruch 1, **dadurch gekennzeichnet, dass** alle Strahlungsquellen (2, 3, 6, 7), die Zeilenabtastkamera oder Flächenkamera (4), die Digitalkamera (5) und das folienartige Element (1) relativ zueinander bewegt werden, bevorzugt soll das folienartige Element (1) translatorisch und besonders bevorzugt von Rolle zu Rolle bewegt werden.

3. Verfahren nach einem der vorhergehenden Ansprüche, **dadurch gekennzeichnet, dass** bei jeder erfassten Abbildung die Messdaten von mindestens fünf zeitlich nacheinander erfassten Abbildungen bei der Bestimmung der Porosität eines folienartigen Elements berücksichtigt werden.

4. Verfahren nach einem der vorhergehenden Ansprüche, **dadurch gekennzeichnet, dass** Abbildungen in äquidistanten Zeitabständen erfasst werden.

5. Verfahren nach einem der vorhergehenden Ansprüche, **dadurch gekennzeichnet, dass** die Differenzkorrelationsfunktionsverläufe mit der Gleichung

$$DKF(\tau) = \left\langle \frac{\sum_{i,j} |I_{ij}(\tau) - I_{ij}(1)|}{\langle I(1) \rangle} \right\rangle$$ bestimmt werden.

6. Verfahren nach einem der vorhergehenden Ansprüche, **dadurch gekennzeichnet, dass** bei der Bestimmung der Porosität Abbildungen der Oberfläche des jeweiligen folienartigen Elements (1) von einer Fläche mit einer Größe von mindestens 400 Pixel, bevorzugt in einer Matrixanordnung mit 20 Pixel * 20 Pixel innerhalb einer Fläche an der Oberfläche eines folienartigen Elements (1) in einem Bereich von 200 $\mu$m² bis 2 cm² erfasst werden.

7. Verfahren nach einem der vorhergehenden Ansprüche, **dadurch gekennzeichnet, dass** ein Datensatz mit mindestens 6000 Ereignissen von Proben folienartiger Elemente mittels Laser-Speckle-Photometrie eingesetzt wird, um ein Model mittels Algorithmen des maschinellen Lernens zu trainieren, mit dem Defekte erkannt werden.

8. Verfahren nach einem der vorhergehenden Ansprüche, **dadurch gekennzeichnet, dass** die Defektdetektion mit einer Auflösung von 11 $\mu$m und einer Messgeschwindigkeit bis zu 80 m/min für eine Bestimmung von Defekten durchgeführt wird.

9. Verfahren nach einem der vorhergehenden Ansprüche, **dadurch gekennzeichnet, dass** zur Detektion von Defekten mindesten zwei Kameras eingesetzt werden, die eine höhere Ortsauflösung erreichen und/oder eine größere Breite eines folienartigen Elements (1) abdecken.

10. Verfahren nach einem der vorhergehenden Ansprüche, **dadurch gekennzeichnet, dass** Ergebnisse in Form von Tabellen oder bildlichen Darstellungen ausgegeben werden, wobei die Defektdichte und/oder das Ergebnis aus der Bestimmung der Differenzkorrelationsfunktion als charakteristische(r) Parameter ausgegeben wird/werden.

11. Verfahren nach dem vorhergehenden Anspruch, **dadurch gekennzeichnet, dass** ein bestimmter charakteristischer Parameter mit entsprechenden spezifischen Grenzwerten, die vorab an vergleichbaren Proben durch Kalibrierung erhalten worden sind, verglichen werden und in einem Oberflächenbereich des jeweiligen folienartigen Elements (1) in dem eine Über- oder Unterschreitung eines spezifischen Grenzwertes erkannt worden ist, eine visuell erkennbare Markierung als bildliche Darstellung ausgebildet oder dort projiziert wird.

**Claims**

1. A method for detecting defects and determining the porosity of foil-like elements, in which electromagnetic radiation with the wavelengths of visible light is emitted in a line from a first radiation source (2) and coherent monochromatic electromagnetic radiation from a second radiation source (3) is directed onto the surface of a foil-like element (1) in alternating positions as lines, and

with at least one electronic line scan camera or area scan camera (4), images of the illuminated surface area of the respective foil-like element (1) are captured in a time-resolved manner, and the time-resolved images are transferred to an electronic evaluation unit (8) and

are stored in an electronic memory (10), whereby the captured images, together with images captured in advance in the same form on identical foil-like elements (1) representing specific defects, are subjected to a learning process based on a convolutional neural network and

by comparing known defects that have been detected in advance on identical foil-like elements (1), certain defects can be detected and coherent monochromatic electromagnetic radiation (7) from a third radiation source (7) is directed onto another surface area of the foil-like element (1) and, in addition, electromagnetic radiation in pulsed form is directed onto the other surface area or in its vicinity by means of a fourth radiation source (6), so that energy is input which generates dynamic speckle patterns and the dynamic speckle patterns are subjected to evaluation in the electronic evaluation unit (8) using a second digital camera (5) with spatial and time-resolved resolution and multiple images captured sequentially from a single energy input, in order to determine the porosity, whereby

for this purpose, grey value intensities I(i,j,$\tau$) of known positions i,j of the two-dimensional images captured at respective times $\tau$ are determined and, from these, the respective difference correlation function curve is determined and the porosity of the foil-like element (1) is determined by the maximum of a difference correlation function curve.

2. The method according to claim 1, **characterised in that** all radiation sources (2, 3, 6, 7), the line scan camera or area scan camera (4), the digital camera (5) and the foil-like element (1) are moved relative to each other, the foil-like element (1) should preferably be moved translationally and particularly preferably from roller to roller.

3. The method according to any one of the preceding claims, **characterised in that**, for each image captured, the measurement data from at least five images captured in succession are taken into account when determining the porosity of a foil-like element.

4. The method according to any one of the preceding claims, **characterised in that** images are captured at equidistant time intervals.

5. The method according to any one of the preceding claims, **characterised in that** the difference correlation function curves are determined using the equation $DKF(\tau) = \left\langle \frac{\sum_{i,j} I(\tau) - I_{ij}(1)}{\langle I(1) \rangle} \right\rangle$.

6. The method according to any one of the preceding claims, **characterised in that**, when determining the porosity, images of the surface of the respective foil-like element (1) are captured from an area with a size of at least 400 pixels, preferably in a matrix arrangement with 20 pixels * 20 pixels within an area on the surface of a foil-like element (1) in a range from 200 $\mu m^2$ to 2 cm2.

7. The method according to any one of the preceding claims, **characterised in that** a data set with at least 6000 events from samples of foil-like elements is used by means of laser speckle photometry to train a model using machine learning algorithms with which defects are detected.

8. The method according to any one of the preceding claims, **characterised in that** the defect detection is performed at a resolution of 11 $\mu$m and a measuring speed of up to 80 m/min for determining defects.

9. The method according to any one of the preceding claims, **characterised in that** at least two cameras are used to detect defects, which achieve a higher spatial resolution and/or cover a greater width of a foil-like element (1).

10. The method according to any one of the preceding claims, **characterised in that** results are output in the form of tables or graphical representations, wherein the defect density and/or the result from the determination of the difference correlation function is/are output as characteristic parameter(s).

11. The method according to the preceding claim, **characterised in that** a specific characteristic parameter is compared with corresponding specific limit values obtained in advance from comparable samples by calibration, and a visually recognisable tag is formed or projected into a surface area of the respective foil-like element (1) in which an excess or deficiency of a specific limit value has been detected.

**Revendications**

1. Procédé de détection de défauts et de détermination de la porosité d'éléments en feuille, dans lequel un rayonnement électromagnétique présentant les longueurs d'onde de la lumière visible est dirigé sous forme de ligne à partir d'une première source de rayonnement (2) et un rayonnement électromagnétique monochromatique cohérent est dirigé en alternance sous forme de ligne vers les mêmes positions sur la surface d'un élément en feuille (1) grâce à une deuxième source de rayonnement (3) et

des images de la région de surface éclairée de l'élément enfeuille (1) respectif sont enregistrées avec une résolution temporelle grâce à au moins une caméra électronique à balayage linéaire ou au moins une caméra matricielle (4), et les images enregistrées avec une résolution temporelle sont transmises à une unité d'évaluation électronique (8) et sont stockées dans une mémoire électronique (10), les images enregistrées étant soumises, en commun avec des images enregistrées au préalable sur les mêmes éléments enfeuille (1) sous la même forme et représentant certains défauts, à un procédé d'apprentissage se basant sur un réseau neuronal convolutif, et sont détectés certains défauts grâce à une comparaison avec des défauts connus qui ont été préalablement détectés sur les mêmes éléments en feuille (1), et un rayonnement électromagnétique monochromatique cohérent (7) est dirigé vers une autre région de surface de l'élément en feuille (1) grâce à une troisième source de rayonnement (7), et un rayonnement électromagnétique est en outre dirigé sous forme pulsée sur l'autre région de surface ou à proximité de celle-ci grâce à une quatrième source de rayonnement (6), de sorte qu'un apport d'énergie générant des motifs dynamiques de chatoiement se produit, et les motifs dynamiques de tavelures sont soumis à une évaluation dans l'unité d'évaluation électronique (8) à l'aide d'un deuxième appareil photo numérique (5) avec une résolution spatiale et temporelle utilisant plusieurs images qui ont été enregistrées successivement lors d'un apport d'énergie, afin de déterminer la porosité, dans lequel pour ce faire, des intensités de valeurs de gris I(i,j,$\tau$) de positions connues i,j des images enregistrées en deux dimensions à des instant $\tau$ respectifs sont déterminées et la courbe de fonction de corrélation différentielle respective est déterminée à partir des dites intensités de valeur de gris et la porosité de l'élément en feuille (1) est déterminée grâce au maximum de la courbe de fonction de corrélation différentielle ainsi déterminée.

2. Procédé selon la revendication 1, **caractérisé en ce que** toutes les sources de rayonnement (2, 3, 6, 7), la caméra à balayage linéaire ou la caméra matricielle (4), la caméra numérique (5) et l'élément en feuille (1) sont déplacés les uns par rapport aux autres, l'élément en feuille (1) devant de manière préférée être déplacé en translation et de manière particulièrement préférée de rouleau à rouleau.

3. Procédé selon l'une quelconque des revendications précédentes, **caractérisé en ce que**, pour chaque image enregistrée, les données de mesure d'au moins cinq images enregistrées successivement dans le temps sont prises en compte lors de la détermination de la porosité d'un élément en feuille.

4. Procédé selon l'une quelconque des revendications précédentes, **caractérisé en ce que** des images sont enregistrées à des intervalles de temps équidistants.

5. Procédé selon l'une quelconque des revendications précédentes, **caractérisé en ce que** les courbes fonctionnelles de corrélation différentielle sont déterminées grâce à l'équation
$$DKF(\tau) = \langle \frac{\sum_{i,j} I(\tau) - I_{ij}(1)}{\langle I(1) \rangle} \rangle \cdot$$

6. Procédé selon l'une quelconque des revendications précédentes, **caractérisé en ce que**, lors de la détermination de la porosité, des images de la surface de l'élément en feuille (1) respectif sont enregistrées à partir d'une surface d'une taille d'au moins 400 pixels, de manière préférée dans un réseau matriciel de 20 pixels * 20 pixels à l'intérieur d'une surface située à la surface d'un élément en feuille (1) et dans une plage comprise entre 200 $\mu m^2$ et 2 cm$^2$.

7. Procédé selon l'une quelconque des revendications précédentes, **caractérisé en ce qu'**un jeu de données contenant au moins 6 000 événements d'échantillons d'éléments de type feuille est utilisé à l'aide de la photométrie de chatoiement laser afin d'entrainer un modèle au moyen d'algorithmes d'apprentissage automatique avec lequel des défauts peuvent être détectés.

8. Procédé selon l'une quelconque des revendications précédentes, **caractérisé en ce que** la détection de défauts est effectuée avec une résolution de 11 $\mu m$ et une vitesse de mesure allant jusqu'à 80 m/min en vue d'une détermination des défauts.

9. Procédé selon l'une quelconque des revendications précédentes, **caractérisé en ce qu'**au moins deux caméras atteignent une résolution spatiale supérieure et/ou couvrant une largeur supérieure d'un élément en feuille (1) sont utilisées pour la détection de défauts.

10. Procédé selon l'une quelconque des revendications précédentes, **caractérisé en ce que** les résultats sont fournis sous forme de tableaux ou de représentations graphiques, la densité des défauts et/ou le résultat issu de la détermination de la fonction de corrélation différentielle étant fournis en tant que paramètre(s) caractéristique(s).

11. Procédé selon la revendication précédente, **caractérisé en ce qu'**un paramètre caractéristique déterminé est comparé à des valeurs limites spécifiques correspondantes, qui ont été obtenues préalablement par étalonnage sur des échantillons comparables, et un marquage visuellement reconnaissable est réalisé sous la forme d'une représentation visuelle ou est projeté dans une région de surface de l'élément en feuille (1) respectif dans laquelle un dépassement ou un sous-dépassement d'une valeur limite spécifique a été détecté.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015221697 B3